(19) Europäisches Patentamt
European Patent Office
Office européen des brevets

(11) EP 3 888 788 A1

(12) # EUROPÄISCHE PATENTANMELDUNG

(43) Veröffentlichungstag:
**06.10.2021 Patentblatt 2021/40**

(21) Anmeldenummer: **20167600.4**

(22) Anmeldetag: **01.04.2020**

(51) Int Cl.:
***B01J 27/02*** (2006.01)
***B01J 27/045*** (2006.01)
***B01J 35/00*** (2006.01)
***B01J 35/04*** (2006.01)
***B01J 37/34*** (2006.01)
***C09C 1/04*** (2006.01)
***B01J 27/04*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Venator Germany GmbH**
**47198 Duisburg (DE)**

(72) Erfinder:
- **Rohe, Markus**
  **47445 Moers (DE)**
- **Lange, Thomas**
  **47057 Duisburg (DE)**

(74) Vertreter: **Nobbe, Matthias**
**Demski & Nobbe**
**Patentanwälte**
**Mülheimer Strasse 210**
**47057 Duisburg (DE)**

(54) **PHOTOKATALYTISCH AKTIVES PARTIKELFÖRMIGES MATERIAL AUF BASIS VON ZNS, VERFAHREN ZU DESSEN HERSTELLUNG UND DESSEN VERWENDUNG**

(57) Die vorliegende Erfindung betrifft ein photokatalytisch aktives partikelförmiges Material auf Basis von ZnS, das gegenüber photokorrosiver Selbstzersetzung stabil ist, Verfahren zu dessen Herstellung und dessen Verwendung.

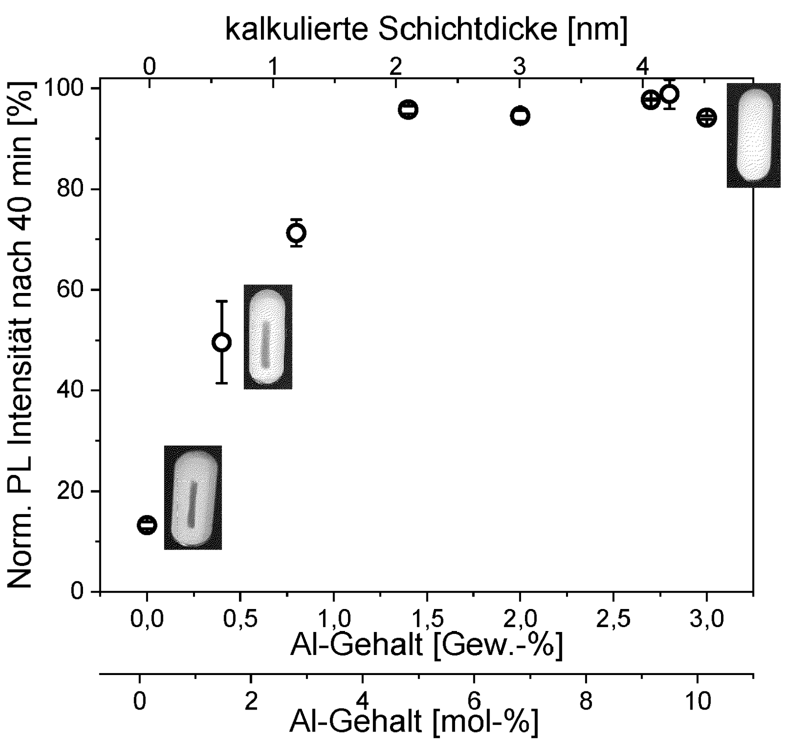


Figur 1

EP 3 888 788 A1

## Beschreibung

Die vorliegende Erfindung betrifft ein photokatalytisch aktives partikelförmiges Material auf Basis von ZnS, das gegenüber photokorrosiver Selbstzersetzung stabil ist, Verfahren zu dessen Herstellung und dessen Verwendung.

Die Photokorrosion von reinem ZnS beeinträchtigt maßgeblich deren Verwendung in vielen Bereichen, wie z.B. in der Pigmentanwendung, in der Photokatalyse oder als UV Sensor, in LEDs sowie als Leuchtstoff. Die Photokorrosion ist ein thermodynamisch stark begünstigter Zersetzungsprozess, welcher durch die gleichzeitige Anwesenheit von Wasser (z. B. in Form von Luftfeuchtigkeit) und UV-Licht hervorgerufen wird. Bei ZnS entstehen Korrosionsprodukte wie $Zn^0$, $S^0$, $ZnSO_4$, ZnO, $Zn(OH)_2$ und $H_2$.

ZnS stellt aufgrund seiner geringen Mohsschen Härte unter anderem als Polymeradditiv ein wichtiges Weißpigment dar, weswegen das bei der Korrosion gebildete elementare Zink und die miteinhergehende Vergrauung große Probleme darstellen. Weiterhin wird ZnS als vielversprechendes Material für photokatalytische Prozesse angesehen, da es eine hohe Effizienz in der Ladungsträgerbildung zeigt, eine lange Lebenszeit der photogenerierten Ladungsträger aufweist und durch die Lage der Bandkantenpotentiale, eine hohe Reduktions- und Oxidationskraft besitzt. In Konkurrenz zu den gewünschten photokatalytischen Prozessen wie z.B. Wasserreduktion oder Abbau von Schadstoffen in Abwässern steht jedoch die thermodynamisch günstigere Photokorrosion, was den Einsatz als Photokatalysator sehr stark beeinträchtigt, da sich ZnS unter den Reaktionsbedingungen stets selbst zersetzt.

Um UV-stabile ZnS Pigmente zu erhalten, ist es im Stand der Technik in der Pigment-Industrie seit fast 100 Jahren gängige Praxis Übergangsmetalle wie Co, Ni oder Fe in geringen Mengen in das ZnS-Gitter einzubauen. Es wird vermutet, dass diese Übergangsmetalle als eine Art "Puffer" für die photogenerierten Ladungsträger fungieren, wodurch die Anzahl dieser Ladungsträger deutlich bzw. komplett reduziert wird und folglich die Photolumineszenz des Zinksulfides deutlich geschwächt wird.

Somit kann auch die Photokorrosion unterbunden werden, da weniger bzw. keine Ladungsträger an die Oberfläche der ZnS-Partikel gelangen, wo eine Photokorrosion stattfinden würde. Für photochemische Anwendungen ist diese Vorgehensweise jedoch nicht zielführend, da die photogenerierten Ladungsträger an der Partikeloberfläche für die gewünschte Zielreaktion benötigt werden.

Um bei der wissenschaftlichen Forschung ZnS als Photokatalysator benutzen zu können, werden sogenannte Opferreagentien (z.B. $Na_2S$ und $Na_2SO_3$) benutzt, welche im Vergleich zum ZnS thermodynamisch günstigere Oxidationspotentiale aufweisen. Somit oxidieren photogenerierte Löcher $Na_2S$ und $Na_2SO_3$ zu Sulfaten und die photogenerierten Elektronen rufen z.B. eine Wasserreduktion ($H_2$-Bildung) hervor. Durch den Verbrauch an $Na_2S$ und $Na_2SO_3$ ist dieser Ansatz zur $H_2$-Bildung für eine großtechnische Realisierung kommerziell jedoch nicht sinnvoll, da hierbei enorme Mengen dieser Opferreagentien aufgewendet werden müssen.

Eine weitere Möglichkeit zur Unterdrückung der Photokorrosion besteht in der Beschichtung der ZnS-Partikel mit anorganischen Materialien, um den Kontakt zwischen Wasser und der ZnS-Oberfläche zu unterbinden. Im Stand der Technik sind so eine Reihe von Patentanmeldungen bekannt, die die Beschichtung von ZnS-Partikeln zur Erhöhung der Wetter- und Photostabilität, oder zur Vermeidung des Bindemittelabbaus zum Gegenstand haben. Beispielhaft sind hier US 2885366, DE1151892, DE 102013105794A1, DE1178963B sowie CN102942922A genannt.

Bei der anorganischen Beschichtung der ZnS-Partikel über nasschemische Syntheserouten ist jedoch die Inhomogenität der erzeugten Schichten bisweilen problematisch. Solche Schichten müssen möglichst dicht sein, um eine komplette Wetter- bzw. Photostabilität zu gewährleisten, und in den oben genannten Studien wurde meist nur eine gesteigerte und keine komplette Stabilität erreicht.

Ferner ist es bekannt, dass über Gasphasenprozesse (z.B. *Atomic Layer Deposition*-ALD) ein kontrollierteres Schichtwachstum angestrebt wird. Solche ALD-Verfahren sind in dem Handbook "Atomic Layer Deposition: Principles, Characteristics, and Nanotechnology Applications"; Wiley; 2013 beschrieben.

Cheng und Mao haben gezeigt, dass eine etwa 10 nm dicke $Al_2O_3$-Schicht sulfidische Partikel (ZnS-Kern/Hülle System) hinreichend gegen Photokorrosion in $O_2$-Atmosphäre schützen kann. Die Anwendung der Partikel beschränkt sich jedoch auf den Bereich von LEDs, wobei eine Rekombination der Ladungsträger im Partikelinneren erfolgt, die zur Emittierung des Lichtes führt. Hierbei müssen die Ladungsträger die Schutzschicht demnach nicht überwinden.

Bei photokatalytischen Prozessen ist es jedoch zwingend erforderlich, dass die Ladungsträger Redox-Reaktionen mit adsorbierten Molekülen eingehen und somit müssen photogenerierte Ladungsträger die isolierende Schicht überwinden. Die Schutzschichten für ZnS müssen daher im Bereich der Photokatalyse deutlich dünner sein, damit eine Ladungsübertragung über Tunnelprozesse möglich ist. Entsprechend dünne Schichten mit einer Schichtdicke bis 2 nm wurden bei den o.a. Arbeiten verwendet, jedoch zeigt sich hier das Problem, dass solche dünnen Schichten zwar eine gesteigerte; aber keine komplette Photostabilität gewährleisten, wodurch eine Langzeitanwendung solcher Photokatalysatoren nicht möglich ist.

Ausgehend von diesem Stand der Technik haben die Erfinder den Lösungsansatz verfolgt, sphärische kobaltfreie Zinksulfid-Partikel (Zahlenmittel $d_{50}$ in der Größenordnung von 400 nm) auf der Partikeloberfläche zunächst mit lasergenerierten, sphärischen Gold-Nanopartikeln (Au-NP etwa 5-8 nm), somit mit etwa 0,5 bis 1,5 Gew.-%, besonders

0,8 bis 1,2 Gew.%, ganz besonders mit etwa 1 Gew-% Au, bezogen auf das Gesamtgewicht des photokatalytisch aktiven partikelförmigen Materials, zu modifizieren und anschließend eine Beschichtung der ZnS-Au-Partikel mit $Al_2O_3$ (~ 2 - 5 nm dick) über einen ALD Prozess durchzuführen. Dies stellt eine erste Ausführungsform gemäß der Erfindung dar.

Die Besonderheit der Erfindung besteht darin, zunächst ein photostabiles ZnS-Material zu erhalten, welches gleichzeitig noch Aktivität in der Photokatalyse aufzeigt.

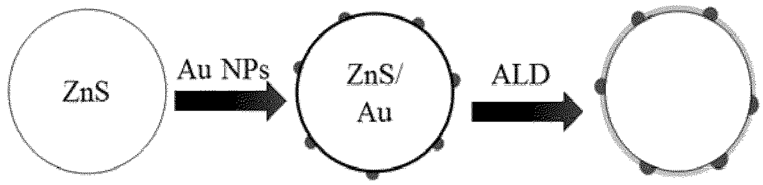


Allgemeiner betrifft die Erfindung ein photokatalytisch aktives partikelförmiges Material

- mit einem Partikelkern aus ZnS,
- mit einer Beladung von Partikeln aus nanoskaligem Metall, ausgewählt aus Au, Ag, Pt, Pd, Cu oder einer Legierung davon, auf dem Partikelkern, und
- mit einer Schicht aus $Al_2O_3$, $SiO_2$, $TiO_2$ oder Mischungen davon um den beladenen Partikelkern.

Unter "Nanopartikel" bzw. "nanoskalige Partikel" im Sinne der Erfindung sind Partikel zu verstehen, die einen Durchmesser kleiner 20 nm aufweisen.

Das erfindungsgemäße partikelförmige Material weist dabei besonders eine Partikelgröße des Partikelkerns (im Zahlenmittel) d50 im Bereich von 300 bis 500 nm, besonders 300 bis 450 nm, ganz besonders 380 bis 450 nm auf.

Das photokatalytisch aktive partikelförmige Material hat in der Regel eine Beladung von 0,5 bis 1,5 Gew.-% besonders 0,8 bis 1,2 Gew.-%, bezogen auf das Gesamtgewicht des photokatalytisch aktiven partikelförmigen Materials, an nanoskaligem Metall, ausgewählt aus Au, Ag, Pt, Pd, Cu oder einer Legierung davon.

Dabei beträgt die zahlenmittlere Partikelgröße (dso) des nanoskaligen Metalls, ausgewählt aus Au, Ag, Pt, Pd, Cu oder einer Legierung davon, vorzugsweise 4 bis 10 nm, besonders 5 bis 8 nm.

Erfindungsgemäß ist die Schicht aus $Al_2O_3$, $SiO_2$, $TiO_2$ oder Mischungen davon um den beladenen Partikelkern in einer Menge von mindestens 1,2 Gew.-%, besonders mindestens 1,4 Gew.-%, berechnet als Metall und bezogen auf das Gesamtgewicht des photokatalytisch aktiven partikelförmigen Materials; vorhanden. So ergibt sich je nach Partikelgröße eine Schichtdicke von mindestens 2nm, besonders mindestens 3nm und ganz besonders mindestens 4nm. Dabei ist die Schichtdicke vorzugsweise so gewählt, daß die Partikel aus nanoskaligem Metall, ausgewählt aus Au, Ag, Pt, Pd, Cu oder einer Legierung davon auf dem Partikelkern, aus der Schicht aus $Al_2O_3$, $SiO_2$, $TiO_2$ oder Mischungen davon "herausragen" und für die Ladungsleitung vom Partikelkern zur Oberfläche der beschichteten Partikel sorgen.

Die Erfindung ist ebenso auf ein Verfahren zur Herstellung des photokatalytisch aktiven partikelförmigen Materials gerichtet, bei dem Partikel aus ZnS mit Partikeln aus nanoskaligem Metall, ausgewählt aus Au, Ag, Pt, Pd, Cu oder einer Legierung davon, in einer wässrigen Phase behandelt werden, und die erhaltenen Partikel mit $Al_2O_3$, $SiO_2$, $TiO_2$ oder Mischungen davon beschichtet werden.

In dem erfindungsgemäßen Verfahren werden vorzugsweise Partikel aus nanoskaligem Metall, ausgewählt aus Au, Ag, Pt, Pd und Cu, einer Legierung davon, verwendet, die jeweils über eine gepulste Laserablation in wässriger Lösung als bevorzugtes Verfahren oder über ein nasschemisches Verfahren hergestellt werden. Eine gepulste Laserablation in wässriger Lösung wird erfindungsgemäß beispielsweise gemäß der Veröffentlichung in Chem. Rev. 2017, 117, 3990-4103 oder Photonik 43 (2011), Nr. 1, S. 50-53 so durchgeführt, dass ein hoch-energetischer, gepulster Laserstrahl auf einem Blech aus Au, Ag, Pt, Pd oder Cu bzw. einer Legierung davon fokussiert wird, welches sich in einer wässrigen Lösung befindet. Durch den Laserstrahl wird die Oberfläche des Metallblechs abgetragen, wodurch sich die Nanopartikel ausbilden, welche in der wässrigen Phase erhalten werden.

Bei Verwendung eines nasschemischen Verfahrens kann erfindungsgemäß so gearbeitet werden, dass die metallischen Nanopartikel über die Reduktion des entsprechenden Metallsalzes in einer wässrigen oder organischen Phase mithilfe eines Reduktionsmittel wie z.B. Natrium-Citrat, Wasserstoff oder Natriumborhydrid hergestellt werden. Dieses Verfahren wird beispielhaft in den Veröffentlichungen J. Am. Chem. Soc. 2006, 128, 3, 917-924 oder Phys. Chem. Chem. Phys., 2011, 13, 2457-2487 beschrieben.

Die Schicht aus $Al_2O_3$, $SiO_2$, $TiO_2$ oder Mischungen davon um den beladenen Partikelkern wird bevorzugt mittels Beschichtung über eine Atomlagenabscheidung in einem zyklischen Verfahren erzeugt, wobei vorzugsweise mindestens fünf Zyklen, besonders mindestens 12 Zyklen durchgeführt werden.

Abschließend kann das erhaltene photokatalytisch aktive partikelförmige Material einer Kalzinierung im Temperaturbereich von 400 bis 600°C über einen Zeitraum von mindestens zwei Stunden unterzogen werden.

Das photokatalytisch aktive partikelförmige Material eignet sich besonders als Pigment in Kunststoffen oder als Photokatalysator.

Die ZnS-Partikel können erfindungsgemäß mittels eines Standard-Verfahrens über eine Fällung aus $Na_2SO_4$ + $ZnSO_4$ mit einer anschließenden Kalzinierung hergestellt werden.

Die Au-NPs können erfindungsgemäß über die Laserablation in wässriger Lösung (PLAL: Pulsed Laser Ablation in Liquid) erhalten werden. Im Gegensatz zu nasschemisch synthetisierten NPs weisen über PLAL hergestellte Partikel eine "reinere" Oberfläche auf, da auf den Einsatz von Präkursoren und Liganden verzichtet werden kann. Die Au-NP-Partikel können gemäß der Veröffentlichung in Chem. Rev. 2017, 117, 3990-4103 oder Photonik 43 (2011), Nr. 1, S. 50-53 generiert werden.

Die Atomic Layer Deposition (ALD) kann erfindungsgemäß mit den Präkursoren Trimethylaluminium (TMA) und $H_2O$ bei einer Temperatur 150 °C durchgeführt werden. Die Zyklenzahl wurde zwischen 5 und 50 variiert, wobei zwischen 0,6 und 5,8 Gew.-% Al abgeschieden wurde. Falls gewünscht können die $Al_2O_3$@ZnS-Au Partikel nachträglich noch kalziniert werden (T~500 °C), was die Photostabilität weiter steigert.

Figuren

Die vorliegende Erfindung wird anhand der beigefügten Figuren weiter erläutert. Dabei zeigen:

Figur 1: Normierte Photolumineszenz-Intensität (PL-Intensität) nach 40-minütiger UV-Bestrahlung in Abhängigkeit vom abgeschiedenen Al-Gehalt und der kalkulierten Schichtdicke (die Normierung erfolgte jeweils hinsichtlich des Integrals der PL-Emissionsbande zum Zeitpunkt to). In den drei Aufnahmen ist die bestrahlte Fläche nach der UV-Einwirkung gezeigt; ab 90 % ist keine Vergrauung zu erkennen.

Figur 2: Zeitlicher Verlauf der normierten PL-Intensität während 40-minütiger UV-Bestrahlung in Abhängigkeit vom abgeschiedenen Al-Gehalt. Alle 90 Sekunden wurde ein Emissionsspektrum aufgezeichnet, welches integriert und anschließend auf das Integral zum Zeitpunkt to normiert wurde.

Figur 3: PL-Spektren vor und nach UV-Bestrahlung von reinem cobaltfreiem ZnS (Figur 3A) und von Sachtolith L (Figur 3B) sowie Aufnahmen der bestrahlten Flächen.

Figur 4: Effekt der Kalzinierung in $N_2$ bzw. Umgebungsluft ($O_2$) auf die Photostabilität von reinem cobaltfreiem ZnS und ZnS@$Al_2O_3$.

Figur 5: Verlust an ZnS durch die Reaktion mit $Ag^+$-Ionen für beschichtete ZnS-Proben mit unterschiedlichen Al-Anteilen (Gew.-%).

Figur 6: Fotografische Aufnahme vom ZnS-Au Eduktmaterial und den beschichteten Proben (Figur 6A). REM-Aufnahmen ausgewählter Proben (Figur 6B). Festkörper-UV/Vis-Spektren von verschiedenen beschichteten ZnS- bzw. ZnS-Au-Proben (Figur 6C).

Figur 7: Normierte, relative PL-Intensität nach 40-minütiger UV-Bestrahlung von ZnS, ZnS-Au und ZnS-Au@$Al_2O_3$ Partikeln.

Figur 8: Photoinduzierter Abbau von Methylorange unter UV-Bestrahlung (100 W Hg-Xe-Lampe). Die angegebenen Fehlerbalken resultieren aus jeweils zwei Bestrahlungsexperimenten.

Wie in den Figuren 1 bis 4 zur Beschichtung von ZnS mit $Al_2O_3$ gezeigt führt diese Beschichtung zu einer Steigerung der Photostabilität der Partikel.

In den Figuren werden die Ergebnisse von beschichteten Zinksulfiden ohne Au NPs vorgestellt (ZnS@$Al_2O_3$ Partikel). Zur Bewertung der Photostabilität wurde die photokorrosive $Zn^0$ Bildung mittels Photolumineszenzspektroskopie (PL) untersucht. Hierzu wurde die Abnahme der Photolumineszenzintensität der jeweiligen Proben (in Form von ZnS-Pasten) während intensiver UV-Bestrahlung verfolgt (siehe Figur 1). Unbehandeltes ZnS vergraut extrem stark, weshalb die PL-Intensität nach der UV-Bestrahlung lediglich etwa 15% betrug. Nach der Beschichtung mit $Al_2O_3$ kann mit zunehmenden Al-Gehalt eine Steigerung der Photostabilität erzielt werden. Al-Anteile ab 1,4 Gew.-%, was einer kalkulierten Schichtdicke von 2 nm entspricht, erzielen einen nahezu kompletten Erhalt der PL-Intensität nach der UV-Bestrahlung (Intensitäten zwischen 90 - 100 %), wobei hierbei keine Vergrauung der Oberfläche mehr zu erkennen ist.

Ein Vergleich der Photostabilität über PL-Intensitäten mit Cobalt-stabilisiertem ZnS (Sachtolith L) als Referenzmaterial ist eher problematisch, da Cobalt als Puffer für photogenerierte Ladungsträger dient und somit als sogenannter

"Killer" bezüglich der Photolumineszenz fungiert (siehe Figur 3; als Vergleich ist links ein reines cobaltfreies ZnS abgebildet). Anhand der Aufnahmen vor und nach der Bestrahlung ist jedoch zu erkennen, dass selbst das Referenzmaterial Sachtolith L durch die intensive UV-Einwirkung sehr leicht vergraut. Somit konnte durch die $Al_2O_3$ Beschichtung sogar eine höhere Photostabilität im Vergleich zur Cobalt-Dotierung erreicht werden, da dort ab 1,4 Gew.-% Al, was einer kalkulierten Schichtdicke von 2 nm entspricht, keine Vergrauung der bestrahlten Fläche mehr zu erkennen ist (Vergleich Figuren 1 und 2).

Weiterhin zeigt sich ein weiterer positiver Effekt durch eine Kalzinierung der beschichteten Proben bei 500 °C in Umgebungsluft bzw. Stickstoffatmosphäre. Wie in Figur 4 zu erkennen ist, steigt die Photostabilität durch eine Kalzinierung bei 500 °C leicht an. Eine Kalzinierung bei 900 °C führt hingegen zu einer Verminderung der Photostabilität.

Zur Bewertung, ob die beschichteten Proben noch eine sulfidische Oberfläche aufweisen bzw. eine dichte $Al_2O_3$-Schicht vorliegt, wurde die Reaktion der Oberfläche mit $Ag^+$-Ionen untersucht. Die sulfidische Oberfläche von ZnS reagiert mit $Ag^+$-Ionen zu $Ag_2S$, wobei sich die Oberfläche bräunlich verfärbt und über den entsprechenden Verbrauch an Silberionen kann ein Verlust an ZnS quantifiziert werden (siehe Figur 5). Figur 5 zeigt, dass ab 1,4 Gew.-% Al keine sulfidische Oberfläche mehr vorliegt (kein Verbrauch an $Ag^+$-Ionen) und somit der ZnS Grundkörper im Rahmen der Beschichtung komplett mit Aluminiumoxid bedeckt wurde.

In den Figuren 6 bis 8 werden die Ergebnisse der Beschichtung von ZnS-Au-Partikeln mit $Al_2O_3$ (ZnS-Au@ $Al_2O_3$-Partikel) gezeigt. Dabei handelt es sich um ZnS-Partikel, auf deren Oberflächen Au-NPs aufgebracht wurden (1 Gew.-%), bevor die Beschichtung mittels ALD erfolgte (Figur 6A; 5, 12 & 50 Zyklen, dies entspricht berechneten Al-Anteilen 0,6, 1,4 & 5,8 Gew.-%). In Figur 6B sind ausgewählte REM-Bilder gezeigt, aus denen eine homogene Verteilung der Au-NPs ersichtlich ist. Weiterhin zeigt die Figur 6C den Erhalt der Oberflächenplasmonenresonanz der Au-NPS (bei etwa 530 nm), was in den entsprechenden Festkörper-UV /Vis-Spektren zu erkennen ist.

Figur 7 zeigt die Photostabilität von den Edukten ZnS und ZnS-Au, sowie ZnS-Au Partikeln, welche für 5, 12 und 50 Zyklen mittels Atomlagenabscheidung beschichtet wurden. Hier ist ersichtlich, dass unbeschichtetes ZnS-Au etwas lichtempfindlicher als reines ZnS ist. Ab 12 ALD-Zyklen (ca. 1,4 Gew.-% Al) kann eine ausreichende Photostabilität jedoch erzielt werden.

Die Bewertung der Photoaktivität von photostabilen Proben erfolgte über die photoinduzierte Entfärbung von Methylorange, wobei photogenerierte Ladungsträger den Abbau des Farbstoffs hervorrufen. Um den Effekt der Au-NPs zu untersuchen, wurden beschichtete ZnS-Proben mit dem gleichen Al-Gehalt (ca. 1,4 Gew.-%) mit und ohne Au untersucht. Ein Vergleich der Abbildungen 1 und 7 zeigt weiterhin, dass beide Proben eine identische Photostabilität aufweisen (PL-Intensität nach UV-Bestrahlung: ca. 90 %).

In Figur 8 ist der Abbau von Methylorange (Umsatz [%]) gegen die Bestrahlungszeit (0-140 min) aufgetragen. In der Zeitspanne -60 bis 0 min erfolgte keine Bestrahlung, um mögliche Adsorptionseffekte auszuschließen. Es ist zu erkennen, dass ZnS mit einer $Al_2O_3$-Schicht, jedoch ohne Au-Nanopartikel, eine geringe Aktivität im photoinduzierten Farbstoffabbau aufweist, wobei 16 % des Farbstoffes nach 140 min entfärbt wurde. Werden vor der $Al_2O_3$-Beschichtung hingegen Au-NPs auf der ZnS-Oberfläche abgeschieden, wird nahezu eine Verdreifachung des Farbstoffabbaus erreicht (45 % nach 140 min). Die Blindmessung (Bestrahlung ohne Katalysator) zeigt leidglich eine Entfärbung von 1,7% nach 140 min und kann dementsprechend vernachlässigt werden.

Die aufgeführten Daten zeigen somit, dass ein photostabiler ZnS-Grundkörper mittels $Al_2O_3$-Beschichtung hergestellt werden kann, dieser jedoch nur eine geringe photoinduzierte Aktivität im Farbstoffabbau aufweist.

Die erfindungsgemäße Kombination aus Au-NPs und $Al_2O_3$-Beschichtung führt hingegen zu einer deutlichen Steigerung der Aktivität, was die Interaktion bezüglich der Ladungsträger zwischen ZnS-Grundkörper und Au-NPs belegt.

Neben der exemplarischen Verwendung von lasergenerierten Au Nanopartikeln, kann das erfindungsgemäße System ebenfalls mit weiteren leitfähigen Nanopartikeln wie Ag, Pt, Pd, Cu, und deren Legierungn dargestellt werden, welche in analoger Weise über die gepulste Laserablation hergestellt werden können (nachzulesen in Chem. Rev. 2017, 117, 3990-4103).

Die erfindungsgemäße Verwendung einer inerten anorganischen Hülle zum Schutz der Partikeloberfläche, exemplarisch gezeigt für $Al_2O_3$, kann zudem auf die Materialen $SiO_2$ und $TiO_2$ übertragen werden, welche ebenfalls gängige Materialen im Rahmen der Atomlagenabscheidung darstellen (Crit Rev Solid State, 38:203-233, 2013).

## Methoden und Materialien

### Methoden

#### Bestimmung der Photokorrosion

Zur Untersuchung der Photostabilität via Photolumineszenz-Spektroskopie wurde zunächst je 300-400 mg Probe gemörsert und mit 150-200 mg vollentsalztem Wasser vermengt. Die erhaltene Paste wurde auf einen Plastikträger gegeben, mit einer Quarzglasscheibe bedeckt und in das Fluoreszenz-Spektrometer Fluorolog®-3 von der Firma HORIBA eingebaut. Anschließend wurde die Probe für 40,5 min mit einer Anregungswellenlänge von 330 ± 2 nm bestrahlt, wobei alle 90 Sekunden ein Emissionsspektrum von 350 bis 650 nm (Schlitzbreite zum Detektor 1 nm) aufgezeichnet wurde. Durch Integration der jeweiligen Emissionsbande und anschließende Normierung auf das Integral zum Zeitpunkt to, kann die relative zeitliche Abnahme der Photolumineszenz-Intensität bestimmt werden, was ein Maß für die Anfälligkeit gegenüber photokorrosiver Vergrauung darstellt.

Bestimmung des Al-Anteils

Zur Quantifizierung des abgeschiedenen Al-Anteils wurde 300 mg der jeweiligen Probe in einen 250 mL Zweihalskolben gegeben und mit 100 mL 2 N HCl versetzt. Anschließend wurde die Dispersion auf 90 °C aufgeheizt und für 3 h gerührt. Währenddessen wurde die Reaktionslösung permanent mit $N_2$ durchspült (2 L/h), um das gebildete $H_2S$ auszutreiben. Die klare Lösung wurde anschließend mittels ICP-Massenspektrometrie hinsichtlich der $Al^{3+}$-Konzentration untersucht.

Untersuchung der Schicht-Dichte mittels $AgNO_3$

50 mg der pulverförmigen Probe wurde in 44 mL vollentsalztes Wasser gegeben und für 2 Minuten im Ultraschallbad dispergiert. Anschließend wurde die Dispersion unter Rühren mit 6 mL 0,1 M Silbernitrat-Lösung versetzt. Nach einer Stunde wurde die Dispersion für 20 min bei 5000 RPM zentrifugiert und der klare Überstand entnommen. Anschließend wurde die $Ag^+$-Konzentration des Überstandes mithilfe der Titration nach Volhard ermittelt, um die Menge an Silberionen zu quantifizieren, die nicht mit der ZnS-Oberfläche reagiert haben. Hierfür wurde 10 mL des Überstandes auf 100 mL mit destilliertem Wasser aufgefüllt. Anschließend wurden wenige Tropfen Ammoniumeisen(III)sulfat-Lösung (0.1 M) als Indikator hinzugegeben, die zuvor solange mit konz. Salpetersäure versetzt wurde, bis die braune Farbe der Lösung verschwand. Als Maßlösung wurde eine 0,01 M Ammoniumthiocyanat-Lösung verwendet.

Über die $Ag^+$-Konzentration im Überstand kann nun der relative Verlust an ZnS berechnet werden:

$$\text{Verlust an ZnS [mol-\%]} = \frac{n_0(Ag^+)-n_t(Ag^+)}{2 \cdot n(ZnS)} \cdot 100\%$$

no ($Ag^+$) = Ausgangsstoffmenge der $Ag^+$-Ionen [mol]
nt ($Ag^+$) = verbrauchte Stoffmenge der $Ag^+$-Ionen während der Titration [mol]
n (ZnS) = Stoffmenge an ZnS [mol]

REM-Untersuchung

Die REM-Messungen erfolgten mithilfe des Rasterelektronenmikroskops SU-70 der Firma Hitachi. Im Rahmen der Vorbereitung wurden die Pulverproben zunächst in Ethanol gegeben und 1 min im Ultraschallbad dispergiert. Von der Suspension wurden einige Tropfen auf einen Graphitwafer gegeben, welcher anschließend im Vakuumtrockenschrank bei 50 °C getrocknet wurde.

UV/Vis-Spektroskopie

Die Festkörperproben wurden mit dem Spektrometer Cary 400 der Firma Varian vermessen. Der Wellenlängenbereich umfasste 400 - 800 nm mit einer Auflösung von 1 nm, wobei Spektralon als Weißstandard diente.

Teilchengrößenbestimmung

Die Teilchengrößenbestimmung erfolgte mithilfe einer analytischen Scheibenzentrifuge von CPS Instruments (Model DC 24000). Die Kalibrierung wurde mittels PCV-Partikeln (d= 0,237 μm; Standard) durchgeführt, wobei die Detektionswellenlänge 405 nm betrug. Über die massengewichtete kumulative Größenverteilung wurde der zahlenmittlere Partikeldurchmesser (dso) ermittelt.

Schichtdickenbestimmung

Die Dicke (d) der aufgebrachten Schichten kann basierend auf der BET-Oberfläche des ZnS-Grundkörpers, der Dichte der Al-, Ti oder Si-Spezies und dem abgeschiedenen Stoffmengenanteil an Al, Si oder Ti mithilfe der folgenden Formeln kalkuliert.

$$V_S = O_{BET} \cdot d$$

$$V_S = \frac{n_{Al}}{\rho_{molar}}$$

$$d = \frac{n_{Al}}{\rho_{molar} \cdot O_{BET}}$$

| | |
|---|---|
| Vs: | Volumen der abgeschiedenen Schicht [$m^3$] |
| $O_{BET}$: | BET-Oberfläche des ZnS-Grundkörpers (4,8 $m^2/g$) |
| d: | Dicke der Schicht [m] |
| $n_{Al}$: | Stoffmenge Al (Si, Ti) [mol] |
| $\rho_{molar}$: | molare Dichte abgeschiedenen Schicht $\rho_{Al}$: 5,134 x $10^4$ mol/$m^3$; $\rho_{Ti}$: 5,297 x $10^4$ mol/$m^3$; $\rho_{si}$: 4,411 x $10^4$ mol/$m^3$) |

Farbstoffzersetzung

Zur Untersuchung des photoinduzierten Farbstoffabbaus wurde zunächst 21 mg der pulverförmigen Probe in 84 mL Methylorangelösung (18 mg/L) für 1 min im Ultraschallbad dispergiert und in den Quarzglasreaktor gegeben. Danach wurde die Dispersion für 60 min im Dunkeln gelagert, damit sich ein Adsorptions-Desorption-Gleichgewicht einstellen kann. Anschließend erfolgte die Bestrahlung durch eine 200 W He(Hg)-Bogenlampe mit einem vorgeschalteten Neutraldichte-Filter (50%). Das Reaktionsvolumen wurde hierbei kontinuierlich gerührt und mit synthetischer Luft (5 mL/min) durchspült. Zu den Zeitpunkten 0, 5, 15, 30, 45, 60, 80, 100 und 140 min wurde jeweils ein Volumen von etwa 1,5 mL entnommen und bei 15000 RPM für 10 min zentrifugiert, um eine Sedimentation des Katalysatormaterials zu erreichen. Anschließend wurde der Überstand hinsichtlich der Konzentration an Methylorange über das UV/Vis-Spektrometer *Evolution 201* der Firma *Thermo Scientific* untersucht und der Abbau von Methylorange über folgende Formel bestimmt:

$$X = \frac{c_0 - c_t}{c_0} = \frac{E_0 - E_t}{E_0}$$

Eo bzw. Et: Extinktion zum Zeitpunkt 0 bzw. t [o.E.] X: Umsatz [o.E]
co bzw. $C_t$: Konzentration zum Zeitpunkt 0 bzw. t [mol/L]

Herstellungsbeispiele

Verwendete Chemikalien:

Trimethylaluminium-Lösung (97 %; Sigma Aldrich)
Gold-Blech (99.99%; 1 mm dick; Allgemeine Gold- und Silberscheideanstalt AG)
Natriumhydroxid Pellets (≥98%, Sigma Aldrich)
Silbernitrat Pulver (≥99%, Sigma Aldrich)
Ammoniumeisen(III)sulfat-Lösung (0.1 N; Bernd Kraft)
0,01 M Ammoniumthiocyanat-Lösung (0, 1 N Reag. Ph. Eur.; Bernd Kraft
Methylorange Pulver (ACS Reagenz, Farbstoffanteil 85 %; Sigma Aldrich
2 N Salzsäure (Reag. Ph. Eu; Fluka Analytical)
Stickstoff (99,999 %, Alphagaz Air Liquide)
Synthetische Luft (99,999 %, Alphagaz Air Liquide)

Synthesen:

Synthese der ZnS-Partikel

Die Herstellung der Zinksulfide erfolgte über eine kontinuierliche Fällung mithilfe von $ZnSO_4$- und $Na_2S$-Lösung, welche aus dem Betrieb entnommen wurden. Für die Fällung wurden die beiden Lösungen zunächst auf 65°C erhitzt, bevor anschließend die Vermischung beider Edukte im Reaktorgefäß erfolgte. Eine ausreichende Durchmischung während der Reaktion wurde durch einen entsprechenden Rührer (400 U/min) erzielt. Nach der Fällung wurde das erhaltene Reaktionsgemisch unter Rühren mit weiterer $Na_2S$-Lösung versetzt, bis der pH-Wert bei 7-7,5 lag. Daraufhin wurde das ZnS mithilfe eines Büchnertrichters von der Lösung abgetrennt und der Filterkuchen für 8 h im Trockenschrank bei 130 °C getrocknet. Das so erhaltene ZnS wurde daraufhin in einem elektrischen Rohrofen unter Umgebungsluft kalziniert. Nach der Kalzinierung wurde die kalzinierte Probe sofort in ca. 1000 mL Wasser abgeschreckt und dispergiert (ca. 6400 U/min & 10 min), gewaschen und die Feststoffabtrennung mittels Büchnertrichter durchgeführt. Der erhaltene Filterkuchen wurde anschließend für ca. 1 h im Trockenschrank bei 130 °C getrocknet und anschließend mit einer IKA Labormühle für 1 min gemahlen.

Synthese der Au-Nanopartikel und deren Abscheidung auf ZnS

Für die Trägerung der lasergenerierten Au Nanopartikel wurden Kolloide verwendet, welche über die gepulste Laserablation in wässriger Lösung (PLAL: Pulsed Laser Ablation in Liquid) hergestellt wurden. Die Synthese der Au Nanopartikel erfolgte mithilfe eines Nanosekunden Nd:YAG-Laser IS400-1 der Firma Edgewave. Hierzu wurde ein Au-Target (Au-Blech mit einer Dicke von 1 mm) in einer Durchflusskammer fixiert, wobei 0.5 mM NaOH-Lösung mit einer Durchflussrate von 100 mL/min durch die Abtragskammer gepumpt wurde. Über ein in der Durchflusskammer befindliches Quarzglasfenster wurde das Au-Target mit dem Laserlicht (Wellenlänge1064 nm) in einem rechteckigen Bewegungsmuster abgerastert, was über ein Scanner System (Sunny S-8210D, Scangeschwindigkeit 2 $ms^{-1}$) mit einer Linos F Theta Linse (Brennweite 100 mm) erfolgte. Für den gepulsten Laserstrahl wurde eine Repetitionsrate von 5 kHz und ein Pumpstrom von 54 A verwendet. Das so hergestellte Au-Kolloid wurde in einem nachgeschalteten Sammelbehälter aufgefangen. Zur Trägerung des Zinksulfids mit Au-Nanopartikeln wurden 16 g ZnS in 1 L destilliertes Wasser gegeben und für 1 min unter Rühren im Ultraschallbad dispergiert. Anschließend wurde unter Rühren 1,5 L des zuvor hergestellten Au-Kolloids (Au-Konzentration: 107,7 mg/L) mit einer Flussrate von 25 mL/min zu der ZnS-Suspension hinzugetropft, was einer Massenbeladung von 1,0 Gew.-% entspricht. Die Dispersionen wurden daraufhin für 60 min gerührt. Anschließend wurden die Partikel abfiltriert, zwei Mal mit je 500 mL destilliertem Wasser gewaschen und im Trockenschrank bei 100 °C für 30 min getrocknet.

Neben der Verwendung von Au Nanopartikeln ist die Laserablation auch auf weitere Materialen wie Ag, Pt, Pd, Cu und deren Legierungen übertragbar (Chem. Rev. 2017, 117, 3990-4103). Hierfür wird lediglich das Target des gewünschten Materials im Rahmen der Laserablation verwendet. Somit sind die hier beschriebenen "IGEL-Partikel" nicht nur auf Au-Nanopartikel beschränkt, sondern können auch mit nanoskaligem Ag, Pt, Pd, Cu und deren Legierungen hergestellt werden.

Beschichtung mit $Al_2O_3$

Die Atomlagenabscheidung (*atomic layer deposition*, *ALD*) von $Al_2O_3$ erfolgte über das kommerziell erhältliche Savannah®-System der Firma Veeco. Zunächst wurde 2 g ZnS oder ZnS-Au Pulver in den Drehtrommelreaktor gegeben, das System evakuiert und der Reaktorraum auf 150 °C aufgeheizt. Anschließend wurde die Drehzahl des Drehtrommelreaktors auf 4 Umdrehungen pro Minute eigestellt. Zur Entfernung von physisorbiertem Wasser erfolgte nun ein 45-minütiger Trocknungsschritt bei einem Ar-Fluss von 20 sccm (Trägergas). Anschließend folgte die alternierende Zugabe der beiden Präkursoren Triemtyhlaluminium (TMA) und vollentsalztes Wasser, welche gasförmig über Kartuschen (beheizt auf Temperatur 25 °C) in das ALD-System eingeleitet werden konnten. In folgender Grafik ist der Ablauf eines einzelnen Abscheidungszyklus detailliert beschrieben:

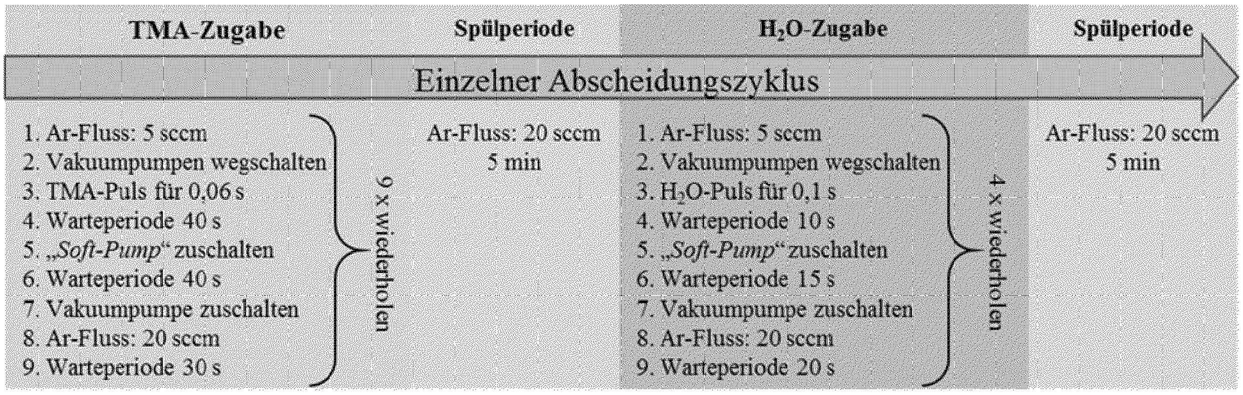


Im Rahmen der experimentellen Arbeiten wurde die Anzahl an Abscheidungszyklen zwischen 5 und 50 variiert, um die Menge der abzuscheidenden Aluminiumspezies zu variieren. Nach Beendigung der Beschichtung wurde der Druck im Reaktorraum mithilfe des Ar-Flusses langsam auf Umgebungsniveau gesteigert und das Probenmaterial ausgebaut.

Neben der Beschichtung mit $Al_2O_3$ ist dieses Verfahren auch auf die Herstellung von Schichten aus $SiO_2$ oder $TiO_2$ übertragbar. Hierzu können Präkursoren wie z.B. Titantetraethanolat, Titantetramethanolat, 3-Aminopropyltriethoxysilan oder Tetrachlorsilan verwendet werden. Somit sind die hier beschriebenen "IGEL-Partikel" nicht nur auf $Al_2O_3$-Hüllen beschränkt, sondern können ebenfalls mit $SiO_2$ oder $TiO_2$ beschichtet werden.

Kalzinierung beschichteter Proben:

Ausgewählte Proben wurden nach der ALD-Beschichtung in synthetischer Luft bzw. unter Stickstoff-Atmosphäre kalziniert. Dazu wurde je 800 mg Probe in ein Quarzglas-Schiffchen überführt und in das Glührohr (Quarzglas) des Kompakt-Rohrofens der Firma Carbolite eingebaut. Dieses konnte über zwei Gasanschlüsse mit dem entsprechenden Gas durchströmt werden (Volumenstrom: 8 L/h). Bevor die Kalzinierung gestartet wurde, erfolgte stets eine 12-stündige Spülperiode mit dem jeweiligen Gas. Anschließend wurde die Temperatur mit einer Heizrate von 5 °C/min auf 500 bzw. 900 °C gesteigert und für 2 h gehalten. Nach dem Abkühlen des Ofens auf Raumtemperatur wurde das Probenmaterial ausgebaut.

## Patentansprüche

1. Photokatalytisch aktives partikelförmiges Material

   - mit einem Partikelkern aus ZnS,
   - mit einer Beladung von Partikeln aus nanoskaligem Metall, ausgewählt aus Au, Ag, Pt, Pd, Cu oder einer Legierung davon, auf dem Partikelkern, und
   - mit einer Schicht aus $Al_2O_3$, $SiO_2$, $TiO_2$ oder Mischungen davon um den beladenen Partikelkern.

2. Photokatalyisch aktives partikelförmiges Material nach Anspruch 1 mit einer Partikelgröße des Partikelkerns d50 im Bereich von 300 bis 500 nm, besonders 300 bis 450 nm, ganz besonders 380 bis 450 nm.

3. Photokatalytisch aktives partikelförmiges Material nach Anspruch 1 oder 2, mit einer Beladung von 0,5 bis 1,5 Gew.-% besonders 0,8 bis 1,2 Gew.-%, bezogen auf das Gesamtgewicht des photokatalytisch aktiven partikelförmigen Materials, an nanoskaligem Metall, ausgewählt aus Au, Ag, Pt, Pd, Cu oder einer Legierung davon.

4. Photokatalytisch aktives partikelförmiges Material nach Anspruch 1, 2 oder 3, wobei die Partikelgröße des nanoskaligen Metalls, ausgewählt aus Au, Ag, Pt, Pd, Cu oder einer Legierung davon, 4 bis 10 nm, besonders 5 bis 8 nm beträgt.

5. Photokatalytisch aktives partikelförmiges Material nach einem der vorhergehenden Ansprüche, wobei die Schicht aus $Al_2O_3$, $SiO_2$, $TiO_2$ oder Mischungen davon um den beladenen Partikelkern mindestens 1,2 Gew.-%, besonders mindestens 1,4 Gew.-%, berechnet als Metall und bezogen auf das Gesamtgewicht des photokatalytisch aktiven partikelförmigen Materials beträgt.

6. Photokatalytisch aktives partikelförmiges Material nach einem der Ansprüche 1 bis 5, wobei die Dicke der Schicht aus $Al_2O_3$, $SiO_2$, $TiO_2$ oder Mischungen davon um den beladenen Partikelkern mindestens 2 nm, besonders mindestens 4 nm, beträgt.

7. Verfahren zur Herstellung des photokatalytisch aktiven partikelförmigen Materials nach einem der Ansprüche 1 bis 6, bei dem Partikel aus ZnS mit Partikeln aus nanoskaligem Metall, ausgewählt aus Au, Ag, Pt, Pd, Cu oder einer Legierung davon, in einer wässrigen Phase behandelt werden, und die erhaltenen Partikel mit $Al_2O_3$, $SiO_2$, $TiO_2$ oder Mischungen davon beschichtet werden.

8. Verfahren zur Herstellung des photokatalytisch aktiven partikelförmigen Materials nach Anspruch 7, bei dem die Partikel aus nanoskaligem Metall, ausgewählt aus Au, Ag, Pt, Pd und Cu, einer Legierung davon, verwendet werden, die über eine gepulste Laserablation in wässriger Lösung oder über eine nasschemische Synthese hergestellt werden.

9. Verfahren zur Herstellung des photokatalytisch aktiven partikelförmigen Materials nach einem der Ansprüche 7 oder 8, bei dem die Schicht aus $Al_2O_3$, $SiO_2$, $TiO_2$ oder Mischungen davon um den beladenen Partikelkern mittels Beschichtung über die Atomlagenabscheidung in einem zyklischen Verfahren erzeugt wird, wobei vorzugsweise mindestens fünf Zyklen, besonders mindestens 12 Zyklen durchgeführt werden.

10. Verfahren zur Herstellung des photokatalytisch aktiven partikelförmigen Materials nach einem der Ansprüche 7, 8 oder 9, bei dem das erhaltene photokatalytisch aktives partikelförmiges Material einer Kalzinierung im Temperaturbereich von 400 bis 600°C über einen Zeitraum von mindestens zwei Stunden unterzogen werden.

11. Verwendung des photokatalytisch aktiven partikelförmigen Materials nach einem der Ansprüche 1 bis 6 als Pigment in Kunststoffen.

12. Verwendung des photokatalytisch aktiven partikelförmigen Materials nach einem der Ansprüche 1 bis 6 als Photokatalysator.

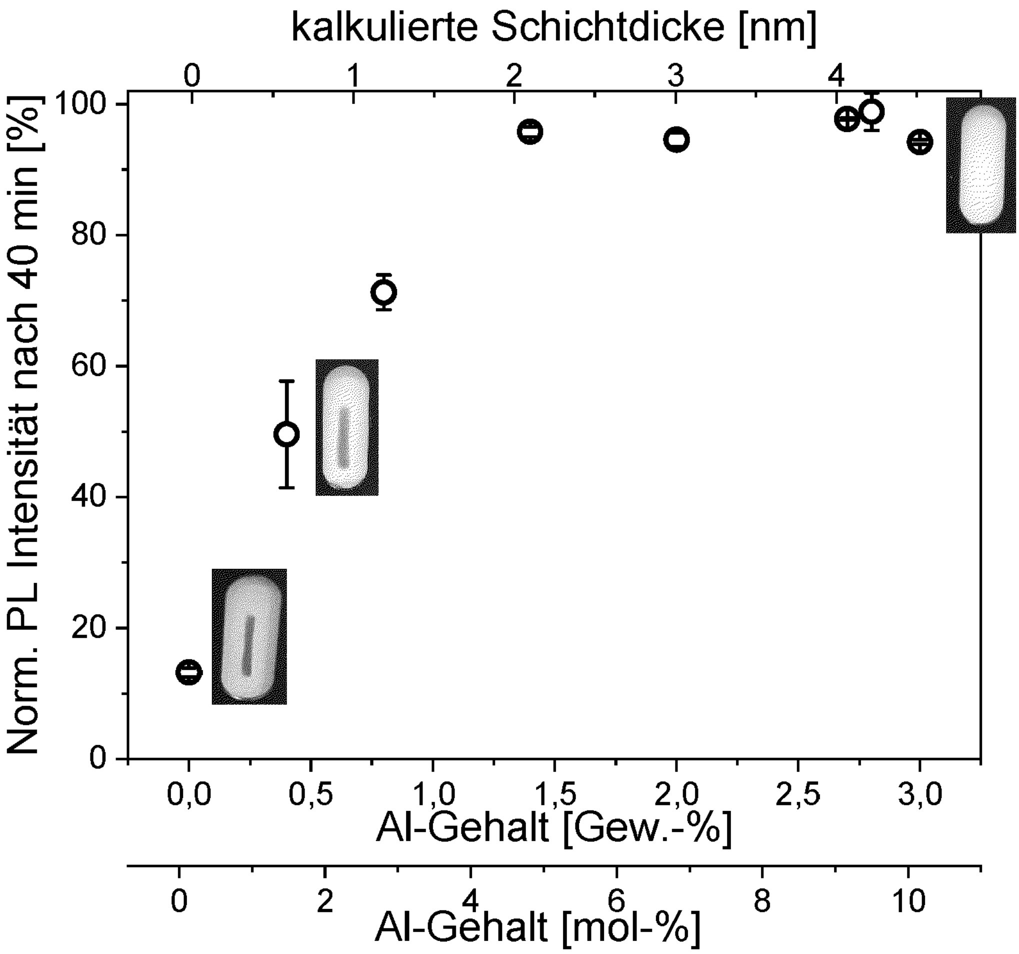
kalkulierte Schichtdicke [nm]
0
1
2
3
4
Norm. PL Intensität nach 40 min [%]
100
80
60
40
20
0
0,0
0,5
1,0
1,5
2,0
2,5
3,0
Al-Gehalt [Gew.-%]
0
2
4
6
8
10
Al-Gehalt [mol-%]

Figur 1

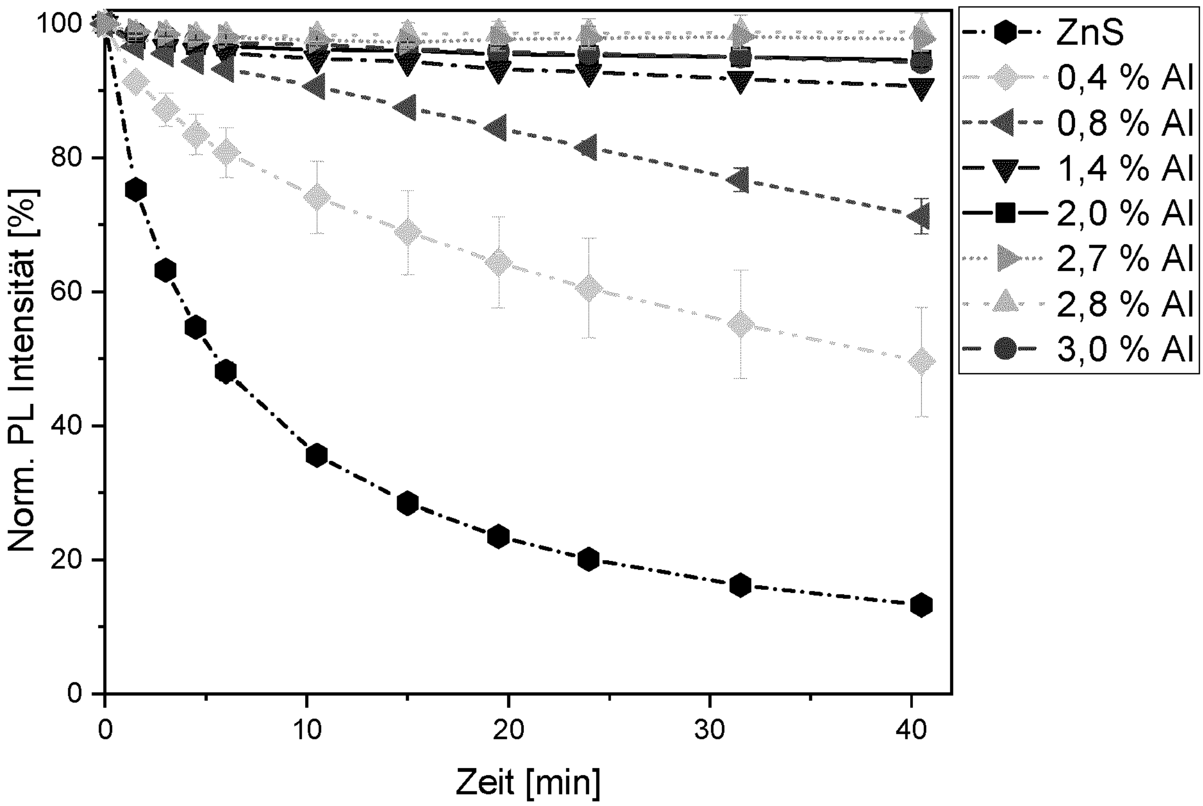
Norm. PL Intensität [%]
Zeit [min]
ZnS
0,4 % Al
0,8 % Al
1,4 % Al
2,0 % Al
2,7 % Al
2,8 % Al
3,0 % Al
0
20
40
60
80
100
0
10
20
30
40

Figur 2

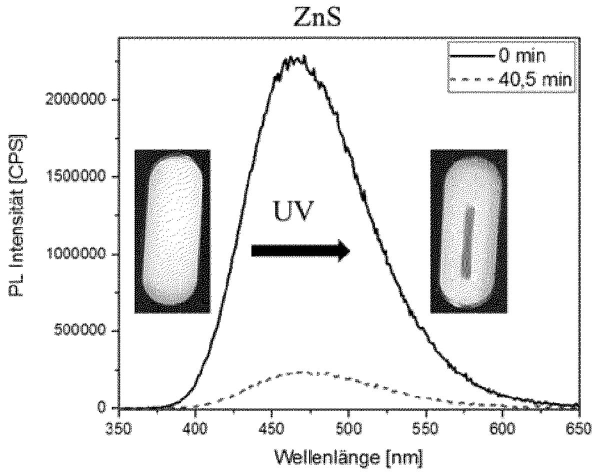


Figur 3A

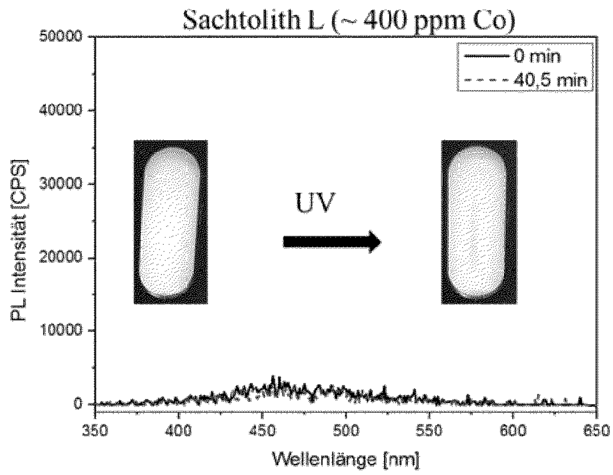


Figur 3B

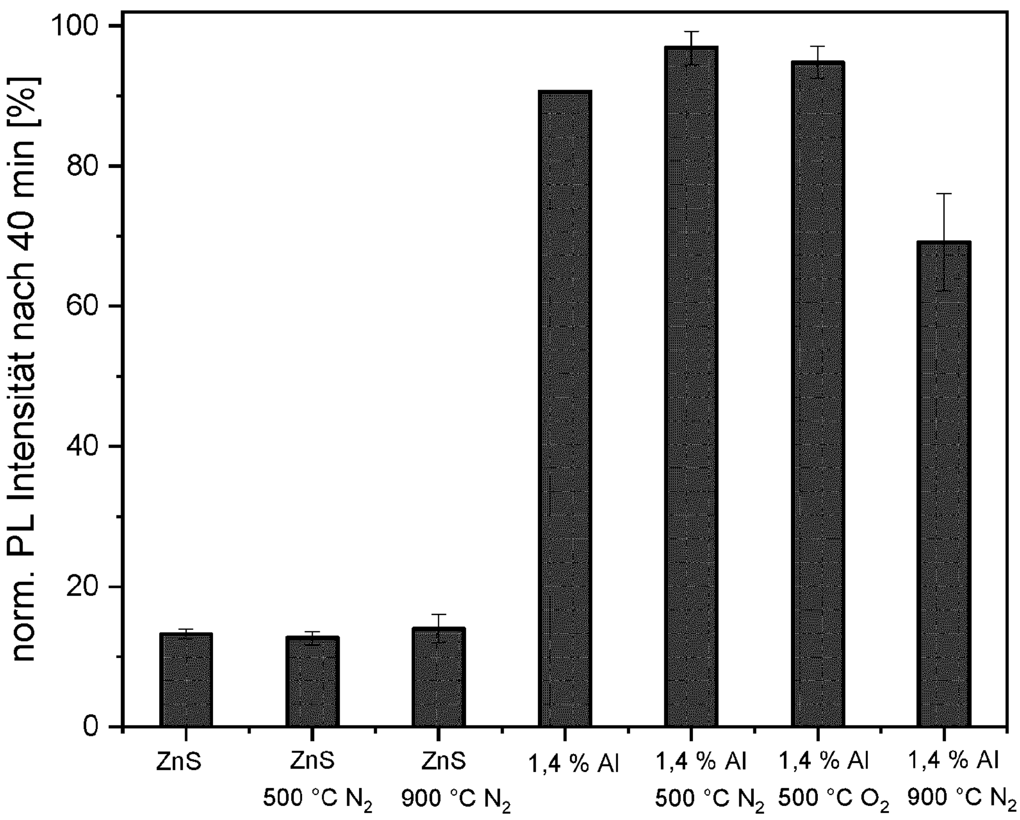


Figur 4.

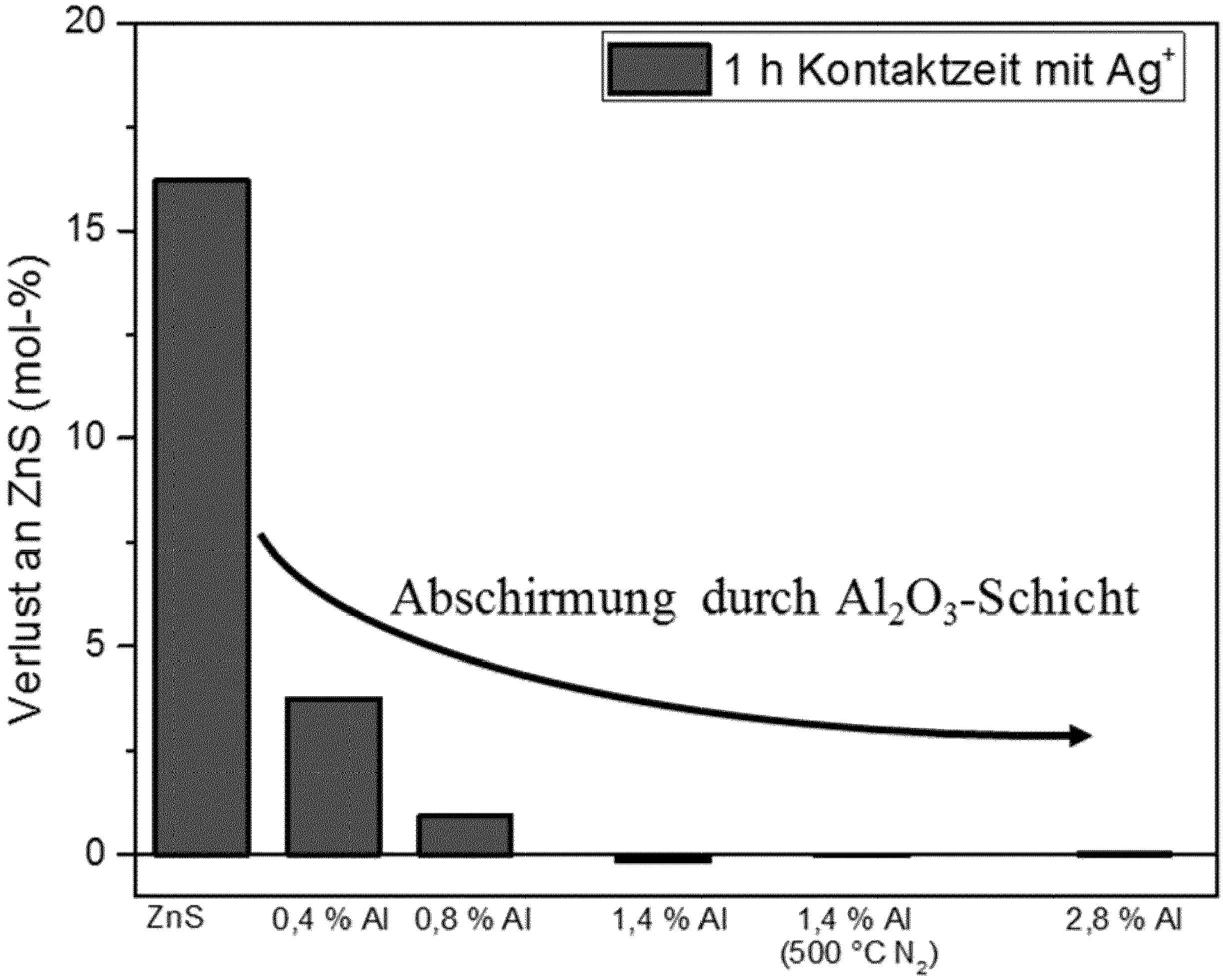

1 h Kontaktzeit mit Ag+
Verlust an ZnS (mol-%)
20
15
10
5
0
Abschirmung durch Al2O3-Schicht
ZnS
0,4 % Al
0,8 % Al
1,4 % Al
1,4 % Al (500 °C N2)
2,8 % Al


Figur 5

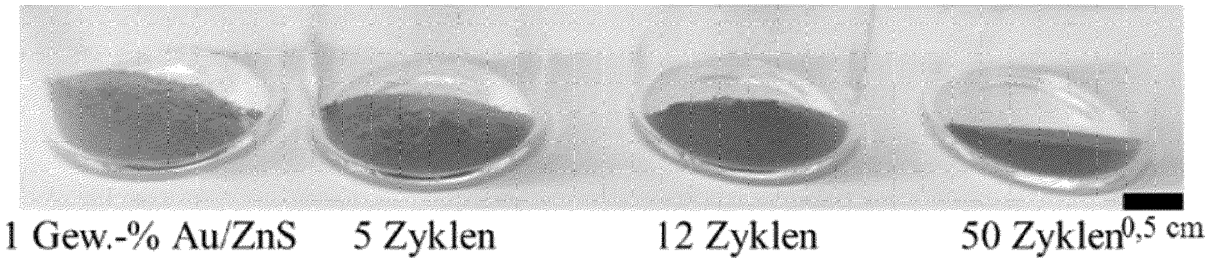


Figur 6A

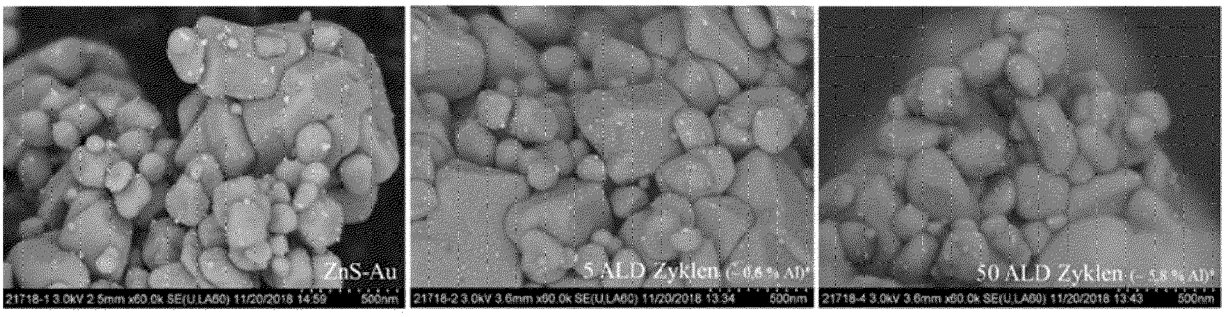


Figur 6B

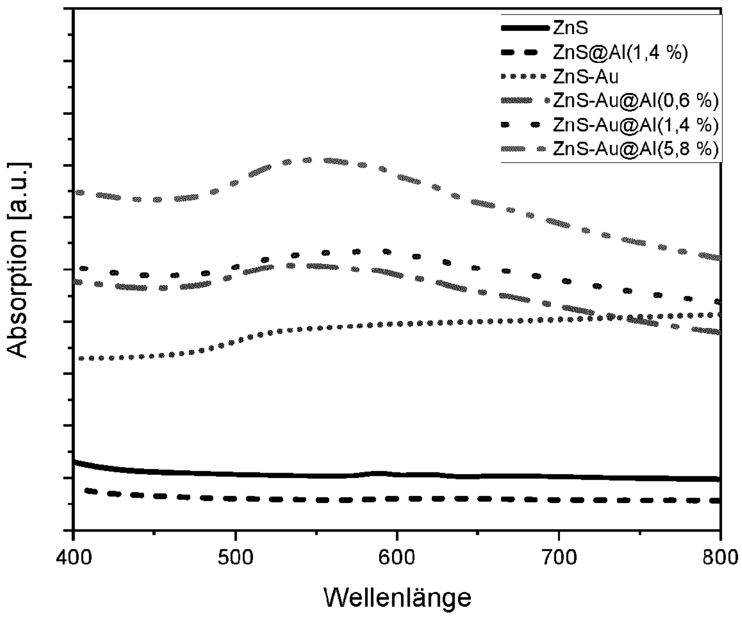


Figur 6C

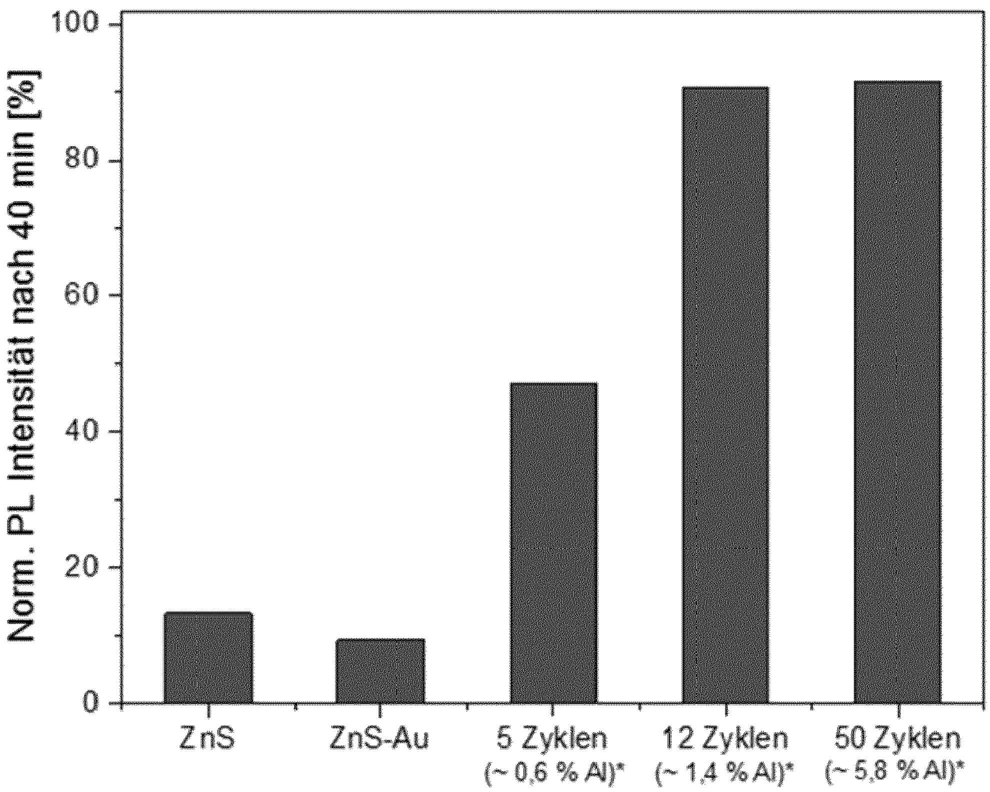
Norm. PL Intensität nach 40 min [%]
100
80
60
40
20
0
ZnS
ZnS-Au
5 Zyklen
(~ 0,6 % Al)*
12 Zyklen
(~ 1,4 % Al)*
50 Zyklen
(~ 5,8 % Al)*

Figur 7

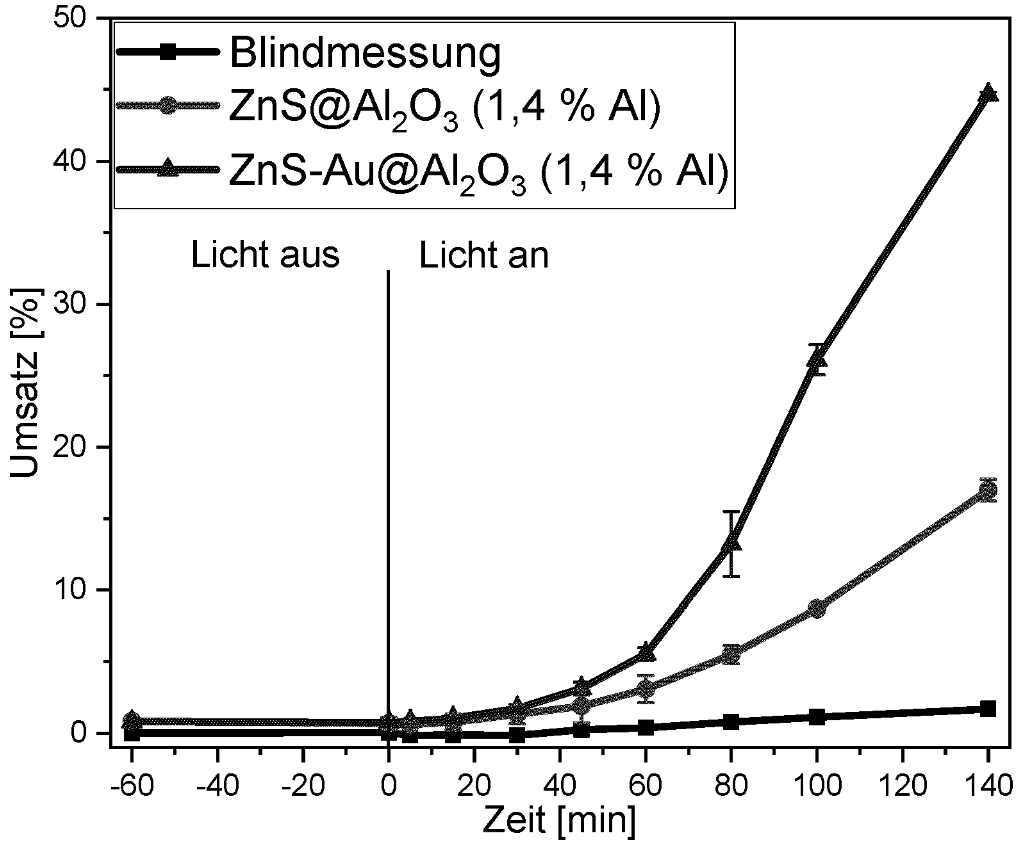
Blindmessung
ZnS@Al2O3 (1,4 % Al)
ZnS-Au@Al2O3 (1,4 % Al)
Licht aus
Licht an
Umsatz [%]
Zeit [min]
0
10
20
30
40
50
-60
-40
-20
0
20
40
60
80
100
120
140

Figur 8

Europäisches Patentamt
European Patent Office
Office européen des brevets

# EUROPÄISCHER RECHERCHENBERICHT

Nummer der Anmeldung
EP 20 16 7600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JIONGLIANG YUAN ET AL: "Fabrication and charaterization of silica nanocoatings on ZnS phosphor particles", NANOTECHNOLOGY, INSTITUTE OF PHYSICS PUBLISHING, GB, Bd. 18, Nr. 9, 7. März 2007 (2007-03-07), Seite 95607, XP020119911, ISSN: 0957-4484, DOI: 10.1088/0957-4484/18/9/095607 * Zusammenfassung * * Seite 1, rechte Spalte, Absätze 2, 3 * * Seite 2, linke Spalte, Absatz 3 - rechte Spalte, Absatz 4 * * Seite 4, rechte Spalte, letzter Absatz - Seite 5, linke Spalte, Absatz 1; Abbildungen 1, 2 * ----- | 1-8, 10-12 | INV. B01J27/02 B01J27/045 B01J35/00 B01J35/04 B01J37/34 C09C1/04 B01J27/04 |
| X,D | WO 2013/185753 A1 (SACHTLEBEN CHEMIE GMBH [DE]) 19. Dezember 2013 (2013-12-19) * Zusammenfassung * * Seite 1, Zeilen 5-14 * * Seite 3, Zeilen 11-17 * * Seite 7, Zeilen 1-26 * * Ansprüche; Abbildung 1; Beispiele * ----- | 1-12 | RECHERCHIERTE SACHGEBIETE (IPC) B01J C09C |
| A | US 2014/174906 A1 (LANDRY DANIEL [US]) 26. Juni 2014 (2014-06-26) * Zusammenfassung * * Absatz [0002] * * Absatz [0015] * * Absätze [0039] - [0047] * * Absätze [0054], [0063], [0075]; Abbildungen 4, 9 * ----- | 1-12 | |

Der vorliegende Recherchenbericht wurde für alle Patentansprüche erstellt

1

| Recherchenort | Abschlußdatum der Recherche | Prüfer |
|---|---|---|
| München | 15. September 2020 | Nazario, Luis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 20 16 7600

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2020

| Im Recherchenbericht angeführtes Patentdokument | Datum der Veröffentlichung | Mitglied(er) der Patentfamilie | Datum der Veröffentlichung |
|---|---|---|---|
| WO 2013185753 A1 | 19-12-2013 | CN 104619786 A | 13-05-2015 |
| | | DE 102013105794 A1 | 12-12-2013 |
| | | EP 2859052 A1 | 15-04-2015 |
| | | ES 2601980 T3 | 16-02-2017 |
| | | JP 6055542 B2 | 27-12-2016 |
| | | JP 2015523311 A | 13-08-2015 |
| | | PL 2859052 T3 | 31-03-2017 |
| | | US 2015152240 A1 | 04-06-2015 |
| | | WO 2013185753 A1 | 19-12-2013 |
| US 2014174906 A1 | 26-06-2014 | US 2014174906 A1 | 26-06-2014 |
| | | WO 2014099843 A2 | 26-06-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2885366 A
- DE 1151892
- DE 102013105794 A1
- DE 1178963 B
- CN 102942922 A


### In der Beschreibung aufgeführte Nicht-Patentliteratur


- Atomic Layer Deposition: Principles, Characteristics, and Nanotechnology Applications. Solche ALD-Verfahren sind in dem Handbook. Wiley, 2013
- *Chem. Rev.,* 2017, vol. 117, 3990-4103
- *Photonik,* 2011, vol. 43 (1), 50-53
- *J. Am. Chem. Soc.,* 2006, vol. 128 (3), 917-924
- *Phys. Chem. Chem. Phys.,* 2011, vol. 13, 2457-2487
- *Crit Rev Solid State,* 2013, vol. 38, 203-233